# EUROPEAN PATENT APPLICATION

(11) **EP 3 193 442 A1**
(43) Date of publication of application: **19.07.2017**
(21) Application number: 16203506.7
(22) Date of filing: 12.12.2016
(51) Int. Cl.: H02P 1/58, H02J 3/14

(54) **IMPROVED MOTOR ON-DELAY TIMER**

(30) Priority: 21.12.2015 US 201514976191
(71) Applicant: Schneider Electric USA, Inc., Andover, MA 01810 (US)
(72) Inventor: FREEMAN, Alan E., Raleigh, NC North Carolina 27601 (US); JEFFERIES, Kevin M., Raleigh, NC North Carolina 27606-2623 (US); EDWARDS, Benjamin W., Rolesville, NC North Carolina 27571-9525 (US); WHITE, Matthew L., Raleigh, NC North Carolina 27606 (US); FILIPPENKO, Konstantin Alexander, 38000 Grenoble (FR); WEILER, Richard Karl, Wake Forest, NC North Carolina 27587-6299 (US)
(74) Representative: Zerbi, Guido Maria

(57) **Abstract**

A load starting system in which an upstream controller determines the sequence and timing for starting a group of loads in the most efficient and timely manner. The sequence and timing is determined by one or more real-time operational characteristics, device rating characteristics, customer/user characteristics or learned/historic characteristics or by a combination of the one or more real-time, device rating, customer/user or learned/historic characteristic.

## Description

### FIELD OF THE INVENTION

The invention is generally directed to motor control and particularly to the starting or restarting of multiple motors in the least amount of time.

### BACKGROUND OF THE INVENTION

When a motor starts it has a high inrush current, which can cause problems with upstream equipment such as transformers, power supplies, and circuit breakers. With several motors trying to start at the same time the inrush problem is much greater. It has been common practice to incorporate a time delay between each motor starting to reduce the high inrush problem, which can significantly increase the time it takes for all motors to come online. Increasing the current carrying capacity of upstream equipment can reduce start-up time but it can also significantly increase cost. Therefore, it would be desirable to minimize the start-up time while keeping the upstream equipment sized as close to the total run-time current capacities as possible.

### SUMMARY OF THE INVENTION

By intelligently selecting the order and timing of the load start sequence it is possible to optimize system start-up time, engaging all loads as quickly as possible while respecting defined system constraints. The benefits include quicker total system on-time, ability to optimize upstream distribution system size (circuit breaker, transformers, power supplies) to total load running currents instead of load inrush currents, and the potential to expand the system without the need to modify timers and circuit breaker settings.

The present invention provides a method for starting multiple loads in a most efficient and timely manner comprising the steps of:
comparing, by a processor, all loads to be started with a threshold characteristic;
selecting, by the processor, from all loads to be started, one or more loads that can be started without exceeding the threshold characteristic;
starting, by a starter, the one or more selected loads; and
repeating the comparing, selecting and starting until all remaining loads have been started.

### BRIEF DESCRIPTION OF THE DRAWINGS

Figure 1 illustrates a system of the present invention for efficiently and rapidly controlling the startup of multiple high inrush loads by an upstream controller.
Figure 2 is a flow chart for the basic steps required for the upstream controller to start multiple loads in the shortest amount of time without exposing upstream protection equipment/power supplies to currents exceeding a threshold.
Figure 3 is a graphical representation or several loads starting sequentially.
Figure 4 is an inrush curve of four loads starting.

### DETAILED DESCRIPTION OF THE EXAMPLE EMBODIMENTS

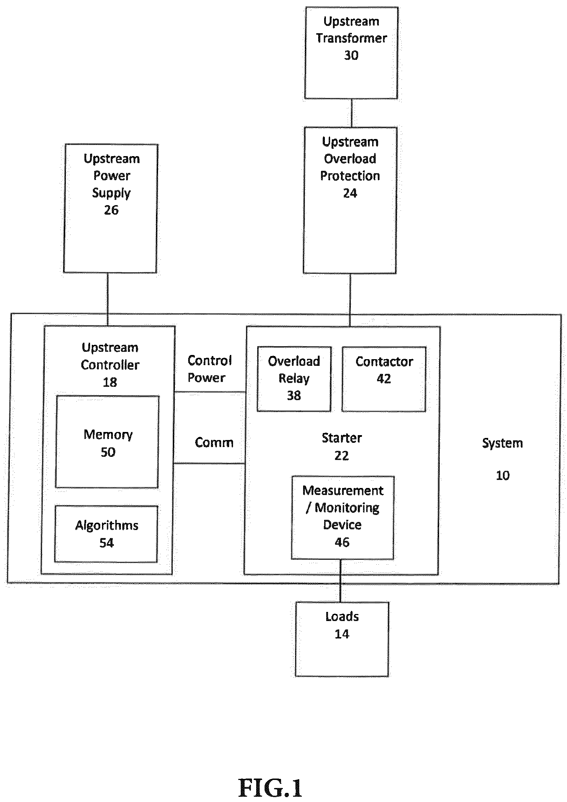

Figure 1 illustrates a system, generally indicated by reference numeral **10**, for sequentially and/or simultaneously starting or re-starting a group of loads **14** as specified by a customer for a given application or in the shortest time possible while not exceeding a threshold based on one or more particular characteristics of each load **14** or of the sum of the particular characteristics for all loads **14** being connected. The system **10** includes an upstream controller **18**, which controls a group of starters **22**, each of which is associated with at least one load **14**. The loads **14** at issue in this disclosure are generally associated with high startup inrush currents, such as motors and lighting systems but could be any application where multiple loads **14** are required to start in rapid succession. Some applications of the invention discussed below will be relevant only to electric motors, in those applications the term "motor load **14**" will be used. Other upstream devices in the system **10** that can be affected by high inrush currents are power supplies **26**, transformers **30** and protective devices **34** such as a circuit breaker, which are generally sized to accommodate the total full load current (FLC) of all loads **14** in the system **10** plus an inrush safety factor which can be determined by the upstream devices, local standards and/or design constraints. Each starter **22** has an overload relay **38** for protecting its associated load **14**, a contactor **42** for turning its associated load **14** ON and OFF and a measurement and/or circuit parameter detection means **46**. Each starter **22** has a unique ID in the upstream controller **18**, under which all data collected from customer/user inputs, real-time operational data and historic data learned from previous activity of the starter's **22** associated load **14** can be stored in a memory **50** of the upstream controller **18**.

Examples of customer/user inputs include load **14** application information, subsets of loads **14** that must always be started together (e.g. conveyor belts), load **14** priorities (for example, loads **14** that are required to start in a specific sequence in a given application), load **14** rating inputs, load warm-up/re-strike time per manufacturer's recommendations (e.g. lighting applications), load **14** characteristics (generic "HID light" vs "IE3 motor" vs. "IE1 motor" to differentiate expected inrush current peak), transformer **30** inrush ratings, circuit breaker **26** trip settings and overload relay **38** trip classes. The customer/user input information is entered into the upstream controller **18** as a configuration file.

Examples of real-time operational inputs include current, voltage (bus, starter), FLC settings, load **14** off-time, load **14** on-time and the thermal memory of each starter **22**. The real-time operational inputs can be obtained by using current or voltage sensors, timers, and aggregation of this current, voltage, and timing information, for instance, current and time information could be collected and stored as an inrush curve for a given starting sequence.

The learned historical inputs are a sum or average of many instances of "real-time operational data" over a large period of time. This data, which is available in real-time in the upstream controller **18**, can be aggregated and analyzed by embedded software into graphical representation such as a load **14** inrush curve, which is a range of expected peak currents and the duration of the peak currents. A maximum or average inrush curve can be used by the upstream controller **18** to characterize each motor load **14** in any of the algorithms disclosed herein.

The upstream controller **18** uses the various sources and information described above to make decisions on the starting sequence and start timing which will be the most efficient electrically and require the least amount of time while meeting any predetermined requirements of the system **10**. A system **10**, as generally described above, can be operated using one of several algorithms **54** discussed below depending on the type of inputs given to the upstream controller **18**.

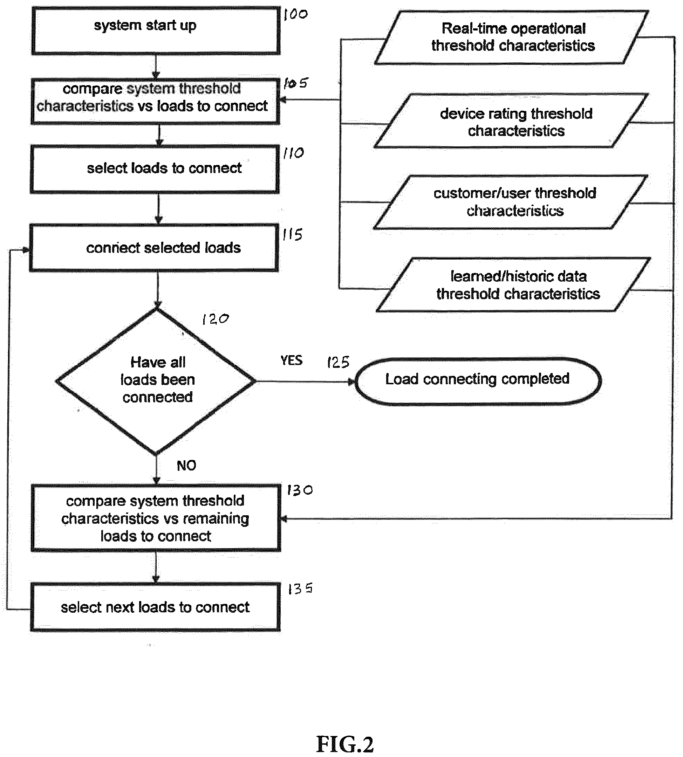

Figure 2 is a flow chart showing the basic steps of the method for starting a group of loads **14** according to present invention. At step 100 the controller **18** initiates the algorithm **54** for selecting and starting the loads **14**. At step 105 the controller **18** compares the particular threshold characteristic with the particular characteristic of the loads **14** available for connection. At step 110 the controller **18** selects one or more loads **14** that meet the threshold characteristic requirement from the loads **14** available for connecting. At step 115 the controller connects the selected load **14**. At step 120 the controller **18** checks to see if the last load **14** has been connected. If the last load **14** has been connected the controller **18** proceeds to step 125, if not the controller **18** proceeds to step 130, where the particular characteristic of the remaining loads **14** to be connected are compared with the particular threshold characteristic. At step 135, the next loads **14** to be connected are selected. The controller **18** proceeds to step 115 where the selected loads **14** are connected. The cycle of steps 120, 130, 135 and 115 continues until all of the loads **14** to be connected have been connected.

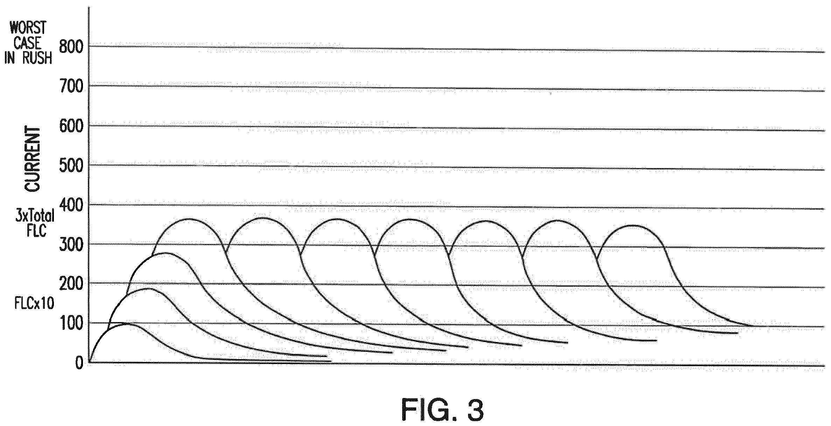

Referring now to Figure 3, a graphic illustration of 10 loads **14** (in this example the loads **14** are motors) being started sequentially. In this basic example of the invention, which monitors the total current drawn by the system **10** in real-time and compares it to a threshold based on the total full load current (FLC) of all loads **14** being started. In this example a group of 10 motors are to be started, each motor having a FLC of 10 amps for a total FLC of 100 amps and a worst case inrush current of 800-1500 amps when all 10 motors are started simultaneously. A threshold which is high enough to permit several motors to start in rapid sequence but low enough to prevent problems with upstream equipment such as transformers, power supplies, and circuit breakers sized for inrush currents above the total FLC is desirable. Therefore, a threshold of 3X total FLC (300 amps) is selected for this example. Using the method described in Figure 2, the controller **18** starts the first four motor loads **14** in rapid sequence by repeating steps 115, 120, 130 and 135, and each of the remaining six motors with a short delay at step 130 until the monitored real-time current drops below the 3X total FLA threshold. This algorithm **54** can be improved with knowledge of historical mean inrush curves associated with each load **14** that would allow the controller **18** to anticipate the total current likely reached by the addition of a new load **10** instead of adding loads **10** and measuring real-time currents. This would permit the selection of a higher threshold value resulting in faster starting of the remaining loads **14**.

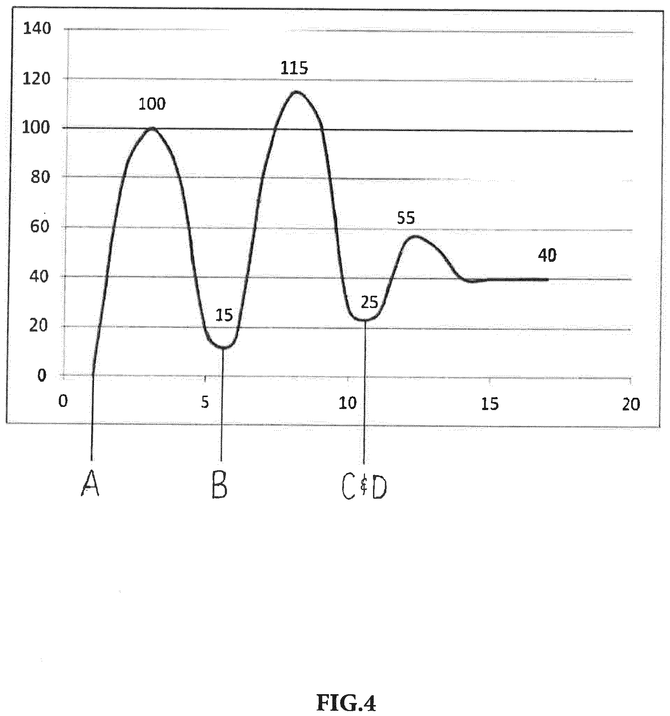

Individual starters **22** can control substantially different loads **14**. The controller **18** can read from memory **50** previously learned historical inrush current and duration data and determine which loads **14** have low inrush peaks (drives, soft starters, etc) as well as determine the typical duration of their inrush current. With this learned data the controller **18** can define a group of loads **14** with low inrush currents that could all be started at once without the need for a timing delay. Similarly the controller **18** can determine which loads **14** have high or long peak inrush currents and anticipate their affect on the system **10**, staggering their starts times for a longer than normal time or ensuring that these loads **14** start when there is a minimal current load on the system **10,** thus minimizing peak system inrush current. An example is given below in table 1 and shown graphically in Figure 4, where loads **14** (A and B) with large inrush currents are started first, with a delay between them, on an unloaded system **10** (to minimize total current on the system **10** at any given time) and the other loads **14** (C and D) are combined and started last since their total inrush currents have very little impact on the total inrush current of system **10.** The algorithm **54** for this embodiment would include the following steps:
Acquiring, from an upstream controller **18**, data representing a typical inrush peak and a typical inrush duration for each starter **22**;
deriving, from the typical inrush peak and the typical inrush duration data, an inrush curve for each starter;
arranging, the inrush curves in groups of low vs. high inrush peak and duration;
determining a starting and a timing sequence beginning with a load **14** having the highest inrush, followed by each subsequent "high inrush" load **14** as soon as the previous inrush current has diminished; and
combining any "low-inrush" loads **14** into a group for starting simultaneously.

**Table 1**

| | FLC | Inrush Current |
|---|---|---|
| Load A | 10A | 100A |
| Load B | 10A | 100A |
| Load C | 10A | 15A |
| Load D | 10A | 15A |

Maintaining a minimum voltage in the system **10** is critical to ensure continuous operation of the system **10**. The upstream controller **18** will have control voltage as an input and will know the control voltage value at any given time. Each time a starter **22** is connected the voltage supplying the collection of starter **22** coils will dip during inrush. If the monitored voltage drops below a threshold the upstream controller **18** could delay the connection of an additional load **14**. The upstream controller **18** will also have the ability to store in memory **50** historical control voltage changes based on connection of additional starters **22**. The upstream controller **18** will be able to store an expected voltage dip for the "nth" starter **22** connected. Thus, a refinement of the threshold can be done based on historical knowledge of the magnitude of voltage dips for individual starters **22**.

In motor load **14** applications, when a short power loss occurs in the system **10** the upstream controller **18** can begin to re-start the motor loads **14** as soon as power is restored to the system **10**. Any motor loads **14** that are still rotating freely can be turned ON immediately with minimal inrush current being added to the system **10**. This phenomenon can be used to re-categorize expected motor inrush curves based on the length of time since they were switched off. For example, if power to the system **10** was off for less than 1 second the expected motor load **14** inrush currents might be re-categorized to a lower level (e.g. a motor load **14** expected to have an inrush current of 8xFLC might be re-categorized to a motor load **14** having an inrush current of 2xFLC).

If the power has been off for more than 1 second the upstream controller **18** can analyze historic instances where the starter **22** had a lower peak inrush current than historically. The upstream controller **18** then determines if the lower peak inrush current is based on how long the starter's **22** motor load **14** was disconnected. When it is applicable, the upstream controller **18** stores in memory **50** the "inrush value" for that starter ID as a dynamic function of time, not as a fixed peak value. This inrush value is then used in determining starting sequence and timing.

The peak inrush can also be assumed (based on customer categorization of motor load **14** type) or learned (based on historical inrush curves for starting that motor load **14** after short off-periods). This can be improved over time by calculation of a learned/typical time constant for the braking of the motor rotor. Expected inrush can be stored in the upstream controller **18** memory **50** under the starter's **22** ID and fit to an exponential curve inrush peak as a function of a learned time constant (per motor load **14**) and time.

Through frequent reporting of motor load **14** status on a communication bus of system **10**, the upstream controller **18** will know the thermal memory of each starter **22.** A motor thermal model based on current and time is also stored in memory **50** of the upstream controller **18** as a way to determine the motor load **14** thermal state for overload protection. In the absence of any other starting priorities, the upstream controller **18** can assign dynamic starting priorities based on "coldest-first" in order to give the "hotter" motor loads **14/** starters **22** extra time to cool down. The upstream controller **18** can take the starter's **22** last stored thermal state minus a decay factor based on the length of time since the measurement was taken (the last time the starter **22** was on). For example, in Table 2 below starter **22** B has a calculated thermal state of 0% and is therefore the coldest motor load **14** and first to be started. Starter **22** E, at 8% calculated thermal state is the next to start with D at 10%, C at 32% and A at 85% following in that order.

**Table 2**

| starter | Thermal state at last <OFF> | OFF time | Calculated thermal state |
|---|---|---|---|
| Starter A | 90% 'full' | 0.5 sec | 85% |
| Starter B | 70% | 20 min | 0% |
| Starter C | 40% | 1 sec | 32% |
| Starter D | 40% | 1 min | 10% |
| Starter E | 10% | 1 sec | 8% |

As in the previous algorithm **54**, the upstream controller **18** will know the thermal memory of each starter **22** in the system **10.** The upstream controller **18** could monitor this over time and store in memory **50** an expected value for the rise in thermal state due to inrush for each starter **22** in the system **10.** For example a given motor load **14** can have a high current inrush and will typically heat up to 30% of its thermal capacity during inrush. This expected inrush current can be stored in memory **50** of the upstream controller **18**. If the upstream controller **18**, using the stored expected inrush current, determines with a high degree of probability that "hot-starting" a particular motor load **14** would cause it to exceed its thermal capacity and trip its overload relay **38**, the start signal could be modified/delayed until the "at-risk" motor load **14** has had time to cool. The upstream controller **18** can make the decision to either simply delay starting the "at risk" motor load **14** (if the sequence of motor load **14** starting is critical) or to start some other motor loads **14** first (if the timing of motor load **14** starting is critical). For instance in starter **22** A above, the thermal status was at 90% "full". If this controlled the load **14** with a large inrush (adding 30% to thermal capacity during inrush) then the large inrush will likely push the starter's **22** overload relay **38** to trip if it is restarted after just 0.5s. Delaying all starters **22** a few seconds or starting other starters **22** prior to starter **22** A will allow the motor load **14** controlled by starter**22** A to cool enough to start and operate without issue. The novelty in this case is the ability to respect the constraints of the upstream controller **18** as a whole (starting sequence vs. starting time) while reducing the risk of causing an overload relay **38** tripping condition.

The load starting system **10** of the present invention responds to the actual behavior of the system **10**, rather than using fixed time delays between load **14** starts, as implemented in simple timer starting systems. The starting system **10** can automatically adjust to the presence of new loads **14** in the system **10**, or to loads **14** being removed, not selected for starting or prevented from starting. The load starting system **10** can be configured to respect limits such as system capacity, rather than time based limits for starting loads **14** to increase the efficiency of starting the system **10**.

Although specific example embodiments of the invention have been disclosed, persons of skill in the art will appreciate that changes may be made to the details described for the specific example embodiments, without departing from the spirit and the scope of the invention.

## Claims

1. A method for starting multiple loads in a most efficient and timely manner comprising the steps of:
comparing, by a processor, all loads to be started with a threshold characteristic;
selecting, by the processor, from all loads to be started, one or more loads that can be started without exceeding the threshold characteristic;
starting, by a starter, the one or more selected loads; and
repeating the comparing, selecting and starting until all remaining loads have been started.

2. The method of claim 1, wherein the threshold characteristic can be one of or a combination of:
a real-time operational characteristic;
a device rating characteristic;
a customer/user characteristic; or
a learned/historic characteristic.

3. The method of claim 2, wherein the real-time operational characteristics can include:
a current;
a voltage (bus or starter);
a group FLC settings;
an on-time;
an off-time; and
a thermal memory of each starter.

4. The method of claim 2, wherein the device rating characteristic can include:
a lighting warm-up/re-strike time;
a load characteristic (lighting type, load type, etc.)
a transformer inrush rating;
a circuit breaker trip setting; or
an overload trip class.

5. The method of claim 2, wherein the customer/user characteristic can include:
a subset of loads that must be started together; or
a load priority sequence.

6. The method of claim 2, wherein the learned/historic characteristic can include:
a load inrush current curve.

7. A method for starting multiple loads in a most efficient and timely manner comprising
the steps of:
acquiring from an upstream controller, data representing a typical inrush peak current and a typical inrush duration for each starter;
deriving, from the typical inrush peak current and the typical inrush duration data, an inrush curve for each starter;
arranging, the inrush curves in groups of low vs. high inrush peak and duration;
combining any "low-inrush" loads into a group for starting simultaneously;
determining a starting and a timing sequence beginning with a load having the highest inrush,
followed by each subsequent "high inrush" load as soon as the previous inrush current has diminished; and
initiated starting of the loads according to the determined starting and timing sequence.
